Europäisches Patentamt

European Patent Office

Office européen des brevets

(11) Publication number: **0 437 238 A2**

# EUROPEAN PATENT APPLICATION

(21) Application number: 91100176.6

(22) Date of filing: 07.01.91

(51) Int. Cl.⁵: **G02F 1/135**

(30) Priority: 12.01.90 JP 5242/90

(43) Date of publication of application:
17.07.91 Bulletin 91/29

(84) Designated Contracting States:
DE FR GB

(71) Applicant: SEIKO INSTRUMENTS INC.
31-1, Kameido 6-chome Koto-ku
Tokyo 136(JP)

(72) Inventor: Ebihara, Teruo
c/o Seiko Instruments Inc., 31-1, Kameido
6-chome
Koto-ku, Tokyo(JP)
Inventor: Yamamoto, Shuhei
c/o Seiko Instruments Inc., 31-1, Kameido
6-chome
Koto-ku, Tokyo(JP)
Inventor: Kato, Naoki
c/o Seiko Instruments Inc., 31-1, Kameido
6-chome
Koto-ku, Tokyo(JP)
Inventor: Sekura, Rieko
c/o Seiko Instruments Inc., 31-1, Kameido
6-chome
Koto-ku, Tokyo(JP)

(74) Representative: Fleuchaus, Leo, Dipl.-Ing. et al
Melchiorstrasse 42
W-8000 München 71(DE)

(54) **Driving method of optically writeable liquid crystal light valve.**

(57) The method of driving the optically writeable liquid crystal light valve. One frame period or one rewriting operation period is divided into an erasing duration for erasing an old or previous image, a writing duration for writing a new image and a holding duration for holding the written imgae. The total of writing duration and holding duration is set longer than the erasing duration so as to improve brightness of the written image when projected on a screen, frame by frame.

F I G. 2

EP 0 437 238 A2

# DRIVING METHOD OF OPTICALLY WRITEABLE LIQUID CRYSTAL LIGHT VALVE

## BACKGROUND OF THE INVENTION

The present invention relates to the driving method of liquid crystal light valve utilized in an image projector for projecting image with high resolution and high brightness on a screen of large scale.

Conventionally, there have been proposed various types of light valves which can be used as a primary image source of a projector for displaying an enlarged image. Particularly, the liquid crystal light valve has been intensively studied for its cost performance. The liquid crystal light valve includes various types such as utilizing electrically-responsive birefringence of nematic liquid crystal, utilizing cholesteric-nematic phase transition of cholesteric liquid crystal, and utilizing ferroelectric liquid crystal.

However, the nematic liquid crystal and cholesteric liquid crystal are not suitable for display of moving picture because of their low response. On the other hand, the light valve utilizing ferroelectric liquid crystal features the high speed switching of image frame and the storage of written image information. Therefore, the ferroelectric liquid crystal has been preferrably utilized in the optically writeable light valve recently.

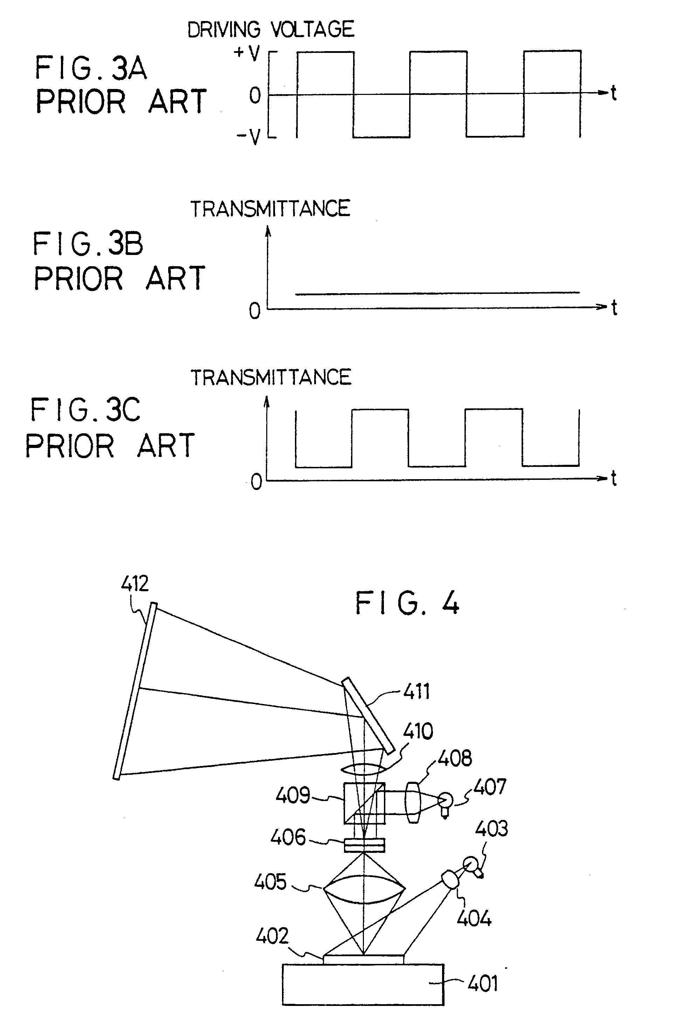

The typical optically writeable liquid crystal light valve is comprised of a double layer of a ferroelectric liquid crystal film having bistability and a photoconductive film having rectifying feature. Driving method of this light valve is described briefly hereinbelow. Fig. 3A shows a driving waveform of an applied voltage according to the conventional driving method. Fig. 3B shows optical response or transmittance change of the liquid crystal film when writing dark image input. Fig. 3C shows the optical response of the liquid crystal film when writing bright image input. When the photoconductive film having rectifying feature is forward-biased by the application of driving voltage, the liquid crystal film is entirely reset to one of the bistable states through the photoconductive film regardless of brightness of input image information. On the other hand, when the driving voltage polarity is reversed, the photoconductive film is turned nonconductive such that no voltage is applied to the liquid crystal film so that the reset state is unchanged under the dark condition because no photocarrier is generated in the photoconductive film. However, when the bright image is inputted, the photocarrier is generated in the reverse-biased photoconductive film such that the driving voltage of the opposite polarity is applied to the liquid crystal film so that a director of the ferroelectric liquid crystal molecules are switched from the reset state to the other state. Consequently, darkness and brightness of the input image information is directly recorded or written into the liquid crystal film. As shown in Fig. 3A, since the light valve can be driven by continuous pulsive waveform signal, the moving picture can be recorded by a certain frequency determined by the response speed of the liquid crystal.

In the above noted conventional driving method, the reset time duration of the liquid crystal equals to the writing time duration or projecting time duration of the image information. Namely, the displayed field on the screen switches alternately between the reset dark state and the image projecting state. Consequently, the conventional driving method has drawback of reduction in mean contrast or mean brightness of the image displayed on the screen.

## Summary of the Invention

An object of the present invention is to, therefore, improve contrast and brightness of moving image projected on the screen. The invention comprises a method of driving an optically writeable liquid crystal light valve having a double layer interposed between a pair of electrodes and composed of a ferroelectric liquid crystal film having bistability and a photoconductive film having rectifying performance. According to the inventive driving method of the optically writeable liquid crystal light valve, one frame period of rewriting operation of image is divided into an erasing duration for resetting the light valve to erase the previously written image, a writing duration for writing new image, and a holding duration for holding or storing the written image as it is. The sum of writing duration and holding duration is set longer than the erasing duration. Further, forward polarity of voltage is applied to the rectifying photoconductive film during the erasing duration, and reverse polarity of voltage is applied only during the writing duration. Zero voltage is applied during the holding duration.

Cross Nicol polarization optical system is utilized to read out the written image. The polarization axis is registered to optical axis of liquid crystal molecules positioned in the reset state by the erasing voltage, so that the entire area of light valve is turned dark by the erasing operation. On the other hand, the written image is read out in a positive reproduction form composed of bright and dark portions during the holding duration which follows the writing duration. In the inventive driving method, since the erasing duration is set shorter than the sum of writing duration and holding duration, no substantial reduction of image brightness is caused in an integrating type detector such as human eye. In similar manner, the inventive driving method may be effective for negative reproduction of written image where the polarization axis is crossed by 45° relative to the optical axis of liquid crystal molecules aligned in the erased or reset state.

The erasing duration and writing duration must be set to a certain interval sufficient to reverse the liquid crystal molecules in response to the application of driving voltage. Adversely, when the writing duration were set too longer, the electric field applied partially to the liquid crystal film would extend in the horizontal direction through the photoconductive film and a multi-layer dielectric mirror to thereby cause degradation of the written image. Therefore, it is quite advantageous to provide the holding duration after the writing duration for avoiding the degradation of the written image as well as for reduction of power consumption.

## BRIEF DESCRIPTION OF THE DRAWINGS

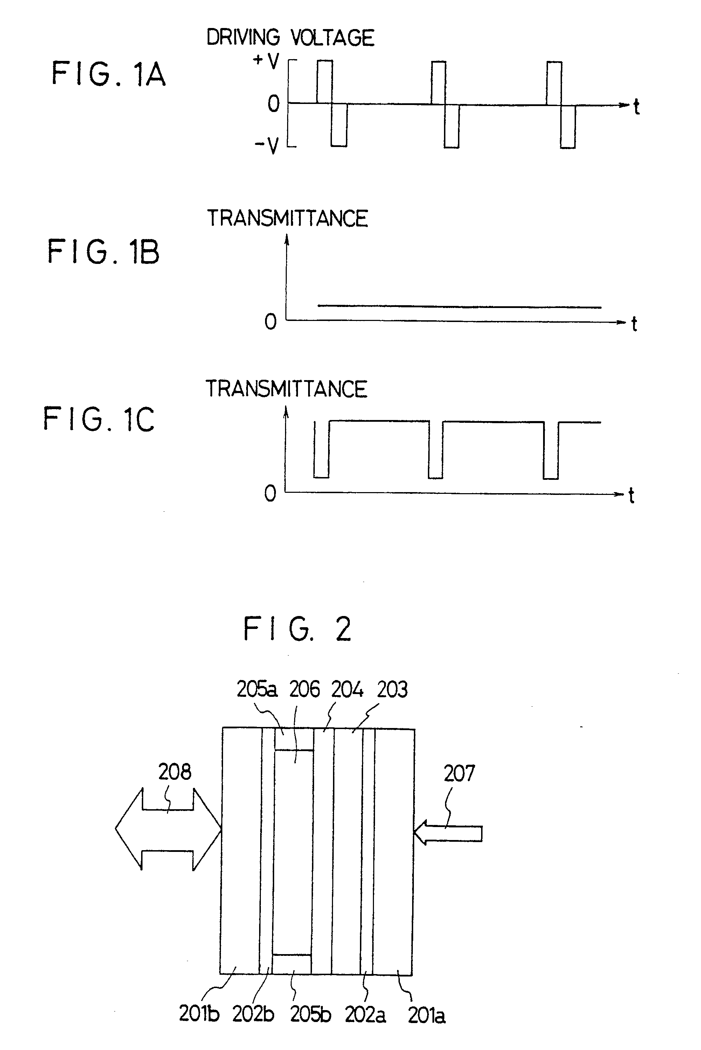

Fig. 1A is a waveform diagram of driving voltage used in the inventive driving method of optically writeable liquid crystal light valve; Figs. 1B and 1C are diagrams showing optical response charateristic of the light valve when driven by the inventive method; Fig. 2 is a sectional view of the optically writeable liquid crystal light valve; Fig. 3A is a waveform diagram of driving voltage used in the conventional driving method of the optically writealbe liquid crystal light valve; Figs. 3B and 3C are diagrams showing optical response characterisitic of the light valve when driven by the conventional method; and Fig. 4 is a schematic diagram of OHP for use in projection of image, provided with the light valve driven by the inventive method.

## DETAILED DESCRIPTION OF INVENTION

Hereinafter, the invention will be described in detail with reference to the drawings. Referring to Fig. 2, the optically writeable forroelectric liquid crystal light valve is comprised of a transparent substrate 201a formed thereon with a transparent electrode 202a. A photoconductive film 203 of PI structure having rectifying characteristic is formed on the transparent electrode 202a in the double layer form of P layer and I layer. A multi-layer dielectric mirror 204 is formed on the photoconductive layer 203. Another transparent substrate 201b having another transparent electrode 202b is fixed through spacers 205a and 205b. A ferroelectric liquid crystal 206 is filled in the spacing. Writing light 207 is irradiated an one side of the light valve, and reading light 208 is irradiated on the other side.

The Fig. 2 light valve can be driven according to the inventive method utilizing a driving waveform shown in Fig. 1A. The driving waveform is comprised of a positive erasing or resetting pulse, a subsequent negative writing pulse, and a following zero voltage effective to hold a written image within one frame. As shown in Fig. 1B, when the writing light is blocked so that the light valve is placed in the dark condition, no change occurs in the liquid crystal film. As shown in Fig. 1C, when the writing light is irradiated on the light valve, there can be obtained a bright projection image, since the image projection time interval is prolonged because the erasing duration ratio is sufficiently reduced relative to one rewriting operation period.

Referring to Fig. 4, the over head projector or OHP is provided with a projection optical system utilizing the light valve driven according to the inventive method. A table 401 is provided to support an object 402 in the form of printed or written plain paper sheet such as note, book and photocopied document. A light source 403 utilizing 100 W of halogen lamp irradiates writing light onto the object 402 through a condensing lens 404 to illuminate the object. The image of the object 402 is focused through a focusing lens 405 onto the photoconductive film of an optically writeable liquid crystal light valve 406 in the form of a reduced image. The light valve 406 is driven by a driving voltage waveform (Fig. 1A) having 10 ms of one frame period or one rewriting operation period which contains an erasing pulse having +20 V of pulse height and 0.5 ms of pulse duration, and following writing pulse having -20 V of pulse height and 0.5 ms of pulse duration. The remaining part of the one frame period is assigned to the holding duration according to the invention.

Then, a projection light source 407 utilizing 500 W of halogen lamp irradiates a projecting light which passes through a collimating lens 408 in the form of a parallel beam, which is then divided by a polarization beam splitter 409. The divided S-polarization component has a linear polarizaiton axis which is adjusted to align with the director of liquid crystal molecules set in the erased state by the erasing pulse to thereby form a reading light 406. The reading light irradiates entire front face of the light valve. A part of the reading light passes through the erased or reset region of the liquid crystal film and is then reflected by the dielectric mirror while unchanging its polarization condition so that the reflected light hardly pass the polarization beam splitter 409. Therefore, that part of the reading light is substantially blocked so as to form dark projection region on a screen 412 through a projection lens 410 and a mirror 411. On the other hand, the remaining part of the reading light passes through the reversed or written region of the liquid crystal film and is reflected by the dielectric mirror while significantly changing its polarization condition. Therefore, the reflected remaining part of the reading light passes through the polarizaiton beam splitter 409 to thereby form a bright projection region on the screen 412. Consequently, an enlarged image of the object 402 is displayed on the screen.

As described above, according to the present invention, the brightness of the projected image can be increased about twice as much as compared to the prior art. Concurrently, the contrast of the projected image can be also improved.

## Claims

1. A method of driving an optically writeable liquid crystal light valve having a double layer interposed between a pair of electrodes and composed of a ferroelectric liquid crystal film having bistability and a photoconductive film having rectifying performance, the method comprising: the first step of applying an erasing voltage between the pair of electrodes in a forward direction with respect to the photoconductive film so as to reset the bistable state of the ferroelectric liquid crystal film; the second step of applying a writing voltage between the pair of electrodes in a reverse direction with respect to the photoconductive film while irradiating writing light onto the light valve so as to write an image in the reset ferroelectric liquid crystal film; and the third step of applying a zero voltage between the pair of electrodes so as to hold the written image within one frame period, wherein the application duration of erasing voltage is set shorter than the total application duration of the writing voltage and the zero voltage during one frame period.

EP 0 437 238 A2

DRIVING VOLTAGE

FIG. 1A

TRANSMITTANCE

FIG. 1B

TRANSMITTANCE

FIG. 1C

FIG. 2

DRIVING VOLTAGE

FIG.3A
PRIOR ART

TRANSMITTANCE

FIG.3B
PRIOR ART

TRANSMITTANCE

FIG.3C
PRIOR ART

FIG. 4